# EUROPÄISCHE PATENTSCHRIFT

(11) **EP 0 456 101 B1**
(45) Veröffentlichungstag und Bekanntmachung des Hinweises auf die Patenterteilung: **27.03.1996**
(21) Anmeldenummer: 91107058.9
(22) Anmeldetag: 01.05.1991
(51) Int. Cl.: C08B 11/193, C08B 11/08

(54) **Methylhydroxypropylcelluloseether und Verfahren zu ihrer Herstellung**
Methylhydroxypropyl cellulose ethers and process for their preparation
Méthylhydroxypropyl cellulose et procédé de préparation

(30) Priorität: 11.05.1990 DE 4015160
(43) Veröffentlichungstag der Anmeldung: 13.11.1991
(73) Patentinhaber: Wolff Walsrode Aktiengesellschaft, D-29655 Walsrode (DE)
(72) Erfinder: Breckwoldt, Jörn, Dr., W-2720 Rotenburg/W. (DE)
(74) Vertreter: Braun, Rolf, Dr.

(56) Entgegenhaltungen:
- EP-A- 0 134 465
- EP-A- 0 161 607
- EP-A- 0 177 893
- DE-B- 1 222 030
- FR-A- 2 215 427
- US-A- 4 096 325

## Beschreibung

Die Erfindung betrifft thermoplastische, in Wasser und organischen Lösungsmitteln lösliche Methylhydroxypropylcelluloseether.

Für verarbeitungs- und anwendungstechnische Zwecke sind Celluloseether von Vorteil, die in Wasser und organischen Lösungsmitteln löslich und thermoplastisch verarbeitbar sind. Beschrieben werden Hydroxypropylcellulosen, die die Eigenschaften zugleich aufweisen sollen. Nachteilig an Hydroxypropylcellulosen sind jedoch folgende Punkte:
a) Die Herstellung erfolgt nach einem Slurry-Prozeß. Das verwendete Lösemittel muß zurückgewonnen werden (hohe Investitionskosten).
b) Erst durch einen hohen molaren Substitutionsgrad von etwa 4 erreichen die Produkte die geforderten Eigenschaften.
c) Die Reaktionszyklen zur Herstellung sind sehr lang.
d) Die Effizienz des teuren Epoxides, Propylenoxid, ist mit 40 bis 50 % relativ gering.

Aus der US-A-3 839 319 ist ein Verfahren zur Herstellung einer Methylhydroxypropylcellulose (MHPC) bekannt. Die Celluloseether sollen thermoplastisch und wasserlöslich sein und haben einen Substitutionsgrad DS (Methyl) von 0,2 bis 1,0 und einen molaren Substitutionsgrad MS (Hydroxypropyl) von wenigstens 1,5. Die nach dem in der US-A-3 839 319 hergestellten Produkte (siehe Vergleichsbeispiel 1) befriedigen aber nicht die an sie gestellten Anforderungen hinsichtlich ihrer Thermoplastizität. Der Erweichungspunkt liegt mit 228°C deutlich höher als bei einer Hydroxypropyl-Cellulose. Die Effizienz des teuren Epoxids, Propylenoxid, ist mit <20 % nicht akzeptabel (hohe Abwasserverschmutzung).

Aus der US-A-4 614 545 sind Methylhydroxypropylcellulosen bekannt, die eine Methoxylsubstitution von 21 bis 35 % und eine Hydroxypropoxylsubstitution von 14 bis 35 % aufweisen. Diese Celluloseether sollen offensichtlich nicht thermoplastisch sein, um besser getrocknet werden zu können. Die Löslichkeit in organischen Lösungsmitteln ist unbefriedigend (siehe Tabelle 3, Löslichkeiten in Ethanol).

In der US-A-4 096 325 werden Celluloseether mit einer molaren Substitution von Hydroxypropylgruppen von 2,5 bis 8 und einer Substitution von Methylgruppen von 1,0 bis 2,4 beschrieben. Diese Produkte sollen sich als Verdicker bzw. Gelbildner in organischen Lösungsmitteln eignen. Ihre Löslichkeit in Wasser und ihr niedriger Flockpunkt sind aber unbefriedigend.

Der Erfindung lag die Aufgabe zugrunde, einen mit Methyl- und Hydroxypropylgruppen substituierten Celluloseether zur Verfügung zu stellen, der relativ einfach herzustellen ist und sowohl in Wasser und organischen Lösungsmitteln löslich ist und der thermoplastisch verarbeitbar ist.

Gegenstand der Erfindung sind thermoplastische in Wasser und organischen Lösungsmitteln lösliche (d.h., daß sich wenigstens 2 g/100 g Wasser oder polares Lösungsmittel bei 25°C klar lösen) Celluloseether, dadurch gekennzeichnet, daß der durchschnittliche Substitutionsgrad DS mit Methylgruppen (= DS-Methyl) 1,5 bis 2,9 und der molare Substitutionsgrad MS (= MS-Hydroxypropyl) mit Hydroxypropylgruppen 1,4 bis 1,9 beträgt.

Als polar organische Lösemittel worden solche verstanden, die polare Gruppen, in denen die Heteroatome Stickstoff, Schwefel und Sauerstoff bevorzugt enthalten sind, in dem Molekül tragen.

Bevorzugte polare Gruppen sind: 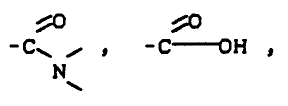
-OH , -O- , 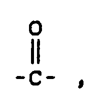
〉NH , -NH₂ , 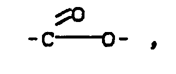
〉S=O ,
Ein typisches polares organisches Lösungsmittel ist Ethanol.

Es liegt in der Natur von Polymeren, daß die Herstellung einer "gesättigten" Lösung des Celluloseethers nicht möglich ist, da mit steigender Konzentration für jeden Viskositätstyp ein Ansteigen der Lösungsviskosität einhergeht, die ihre Grenze in der technischen Verarbeitbarkeit findet.

Der DS-Methyl beträgt in einer besonders bevorzugten Ausführungsform 2,4 bis 2,6 und der MS-Hydroxypropyl 1,5 bis 1,7.

Besonders bevorzugte Celluloseether haben einen thermischen Flockpunkt von wenigstens 30°C, insbesondere zwischen 30 und 40°C.

Gegenstand der Erfindung ist weiterhin ein Verfahren zur Herstellung eines hochsubstituierten Methylhydroxypropylcelluloseethers, wie oben definiert, dadurch gekennzeichnet, daß das Verfahren in folgenden Schritten durchgeführt wird:
a) Bildung einer Alkalicellulose durch Umsetzung von Cellulose mit Alkali
b) Umsetzung der Alkalicellulose mit einer Hydroxypropylgruppe übertragenen Verbindung und
c) Methoxylierung nach Abschluß der Hydroxypropylierung durch Zugabe eines Methylierungsmittels.

Als Ausgangsmaterial für das erfindungsgemäße Verfahren werden gemahlene Cellulosen, wie Bleichlinters oder Holzzellstoff, verwendet. Die Viskositätsstufen der Produkte lassen sich durch die Auswahl der Cellulosen, die einen entsprechenden Durchschnittspolymerisationsgrad aufweisen, einstellen. Niedrigviskose Produkte können durch Verwendung von nach üblichen Verfahren oxidativ abgebauten Zellstoffen hergestellt werden.

Die Alkalisierung der Cellulose und ihre nachfolgende Veretherung kann in Anwesenheit von organischen Lösemitteln bei einem Gewichtsverhältnis des Lösungsmittels zur Cellulose, vorzugsweise 2,5 : 1, durchgeführt werden, um lokale Überhitzungen zu vermeiden und zu gleichmäßig veretherten Produkten zu gelangen. Geeignete organische Lösemittel sind niedere Alkohole, die vorzugsweise 2 bis 4 Kohlenstoffatome pro Molekül enthalten, sowie Ether mit vorzugsweise 2 bis 4 Kohlenstoffatomen pro Molekül oder Mischungen dieser Lösungsmittel.

Die Cellulose wird zur Alkalisierung mit der Natronlauge besprüht, wobei ihre Konzentration 20 bis 50 Gew.-%, vorzugsweise 40 bis 50 Gew.-%, betragen soll und die eingesetzte Menge nicht kleiner als 1,6 Mol Natriumhydroxid pro Mol Cellulose ist. Erfindungsgemäß erfolgt die Zugabe des Hydroxyalkylierungsmittels entweder vor der Natriumhydroxydzugabe oder nach der Alkalisierungsphase. Zur Veretherung wird das Reaktionsgemisch bis auf Temperaturen von 50 bis 100°C, vorzugsweise 70 bis 90°C, aufgeheizt und das eingestellte Temperaturniveau bis zur vollständigen Umsetzung beibehalten. Vor der Zugabe des Methylierungsmittels wird das Reaktionsgemisch gekühlt, vorzugsweise auf Temperaturen unter 50°C, und gegebenenfalls wird weiteres Natriumhydroxid zugesetzt. Nun wird erneut auf Temperaturen von 50 bis 100°C, vorzugsweise 70 bis 90°C, aufgeheizt und bei dieser Temperatur innerhalb von 1 bis 5 Stunden, vorzugsweise 1,5 bis 3 Stunden, die Veretherungsreaktion durchgeführt. Hierbei stellt sich bei Anwendung eines Überschusses von Methylchlorid von bevorzugt 6 bis 12 Mol pro Mol Cellulose ein maximaler Druck von 18 bis 20 bar ein, weshalb die Umsetzung in Druckreaktoren durchgeführt wird.

Die Reinigung der so erhaltenen Rohprodukte kann bei den nichtionischen Derivaten durch eine Heißwasserwäsche erfolgen, da sie einen thermischen Flockpunkt aufweisen.

Die Unlöslichkeit in heißem Wasser erlaubt eine Reinigung mit Wasser auf einen niedrigen Aschegehalt im Vergleich zur Reinigung mit wäßrig organischen Lösemitteln, welche nicht nur die Nachteile haben, daß sie weit teurer sind, sondern welche auch das Verfahren komplizieren, weil sie zurückgewonnen werden müssen. Darüber hinaus kann selbst mit großen Mengen organischer Lösemittel ein so niedriger Aschegehalt wie mit heißem Wasser nicht erreicht werden.

In überraschender Weise werden für die Methylhydroxypropylcellulose mit einem DS-Methyl von 1,5 bis 2,9 und einem MS-Hydroxypropyl von 1,4 bis 1,9, besonders bevorzugt mit einem Methoxyl DS von 2,4 bis 2,6 und einem Hydroxypropyl MS von 1,5 bis 1,7, folgende wünschenswerte Eigenschaften in einem Cellulosederivat vereinigt:
1. Löslichkeit in kaltem Wasser,
2. Unlöslichkeit in heißem Wasser,
3. Löslichkeit in einer großen Anzahl von polar organischen Lösemitteln,
4. Thermoplastizität,
5. excellente Filmeigenschaften,
6. gute Grenzflächenspannung,
7. sehr niedriger Aschegehalt.

Bei den erfindungsgemäßen Celluloseethern haben die Bezeichnungen DS (Degree of Substitution) und MS (molarer Substitutionsgrad) die übliche Bedeutung:

In jeder Anhydroglucoseeinheit in dem Cellulosemolekül sind drei Hydroxylgruppen vorhanden.
- DS: ist die Durchschnittsanzahl der in der Cellulose substituierten Hydroxylgruppen pro Anhydroglucoseeinheit,
- MS: ist die Durchschnittsanzahl der Mole des mit der Cellulose kombinierten Reaktionspartners pro Anhydroglucoseeinheit.

Bevorzugte Mittel zur Übertragung der Hydroxypropylgruppe sind insbesondere Propylenoxid, aber auch Propylenchlorhydrin.

Besonders bevorzugte Methylierungsmittel sind Methylchlorid aber auch Dimethylsulfat, Methylbromid, Methyliodid, Methansulfonsäure-methylester, Benzyl-4-sulfonsäure-methylester, Toluol-4-Sulfonsäure-methylester, Trifluormethansulfonsäure-methylester.

Die erfindungsgemäß hergestellten Celluloseether sind in einer Vielzahl von organischen Lösemitteln löslich. Bevorzugt sind aliphatische und cycloaliphatische Alkohole, wie Methanol, Ethanol, Isopropanol (Wasseranteil 20 %), tertiär Butanol (Wasseranteil 10 %); aliphatische, cycloaliphatische Ether, wie 1,4-Dioxan, Tetrahydrofuran; Carbonsäuren, wie Essigsäure; chlorierte Kohlenwasserstoffe, wie Chloroform, Methylenchlorid; Amine, wie Pyridin; Amide, wie Dimethylformamid; schwefelhaltige, organische Lösemittel, wie Dimethylsulfoxid und aromatische Kohlenwasserstoffe in Verbindung mit aliphatischen Alkoholen, wie Toluol/Ethanol (80/20).

Die erfindungsgemäß hergestellten Celluloseether zeigen eine gute Filmbildung. Die Filme sind durchsichtig, sehr flexibel und lösen sich weder in Ölen und Fetten noch in Benzin. Von wäßrigen Systemen (Säuren, Laugen) und einer Vielzahl von organischen Lösemitteln werden die Folien aufgelöst (siehe Löseverhalten der Celluloseether). Die Filme der Methylhydroxypropylcellulose sind heißsiegelfähig.

Der Erweichungspunkt einer hochsubstituierten Methylcellulose liegt bei 293°C, der einer Hydroxypropylcellulose (MS = 4) bei 178°C. Es durfte nun erwartet werden, daß die Thermoplastizität einer Methylhydroxypropylcellulose annähernd dem Durchschnitt entsprechen durfte. Überraschenderweise zeigte sich, daß die erfindungsgemäß hergestellte Methylhydroxypropylcellulose mit einem Erweichungspunkt von 153°C thermoplastischer als eine Hydroxypropylcellulose ist.

Die Löslichkeit der erfindungsgemäßen Celluloseether in organischen Lösemitteln, insbesondere in niederen Alkoholen, ist zur Verdickung von kosmetischen Artikeln, Lotionen, Parfüms etc.; in Abbeizpasten sowie einigen Druckfarben ausnutzbar.

Die Celluloseether sind aufgrund ihres sehr niedrigen Aschegehaltes als Verdickungsmittel und Suspendiermittel in keramischen Massen einsetzbar. Weiter sind sie als Suspensionsstabilisatoren in der Suspensionspolymerisation vorteilhaft einzusetzen.

Aufgrund der excellenten Filmeigenschaften der Methylhydroxypropylcellulose ist diese für die Herstellung von Folien geeignet.

### Beispiele

### Im folgenden bedeuten:

### Flockpunkt

Der Flockpunkt wird bei 0,5 %igen Lösungen im 50 ml Becherglas bestimmt. Die Temperatur, bei der die erste Trübung eintritt, wird als Flockpunkt in °C angegeben.

Durch die Flockpunktsbestimmung wird die Temperaturbeständigkeit einer MHPC in wäßrigen Systemen geprüft.

### Aschegehalt

Die Bestimmung der Sulfatasche erfolgt durch Abrauchen unter Zusatz von konzentrierter H₂SO₄ der vorher salzfrei gewaschenen und getrockneten MHPC und nachfolgendem einstündigen Glühn bei ca. 600°C. Die Sulfatasche ist ein Maß für die Güte des Reinigungsprozesses.

### Beispiel 1

### Methylhydroxypropylcellulose (MHPC)

In einem mit Inertgas gespülten 2-1-Druckautoklaven werden 121,5 g feingemahlener Holzzellstoff mit 120 g 50 %iger Natronlauge 60 min bei Raumtemperatur alkalisiert. Dann werden 152 g Propylenoxid zur Alkalicellulose gegeben. Die Temperatur im Autoklaven wird langsam auf 80°C erhöht und bei dieser 120 min gehalten. Nach dem Abkühlen des Reaktors werden 180 g Natronlauge (Prills) und 12 Mol Methylchlorid pro Mol Cellulose in das Reaktionsgefäß gegeben. Über einen Zeitraum von 60 min wird der Reaktor auf 80°C erwärmt. Nach 3 Stunden wird die MHPC mit Heißwasser von Nebenprodukten gereinigt und getrocknet.

Die entstandene MHPC besitzt bei einem DS (OMe) von 2,63 und einem MS (HP) von 1,63 einen Flockpunkt von 33°C, gemessen in einer 0,5 %igen wässrigen Lösung.

Die Chemikalienausbeute, bezogen auf Propylenoxid, beträgt 47 %.

### Vergleichsbeispiel 1 (entspricht Beispiel 2 der US-PS 3 839 319)

In einem mit Inertgas gespülten 2-l-Druckautoklaven werden 127,3 g fein gemahlener Zellstoff (Linters) mit 88 g 50 %iger Natronlauge 60 Minuten bei Raumtemperatur alkalisiert. Nach der Zugabe von 510 g Propylenoxid und 103 g Methylchlorid wird der Reaktionsansatz über einen Zeitraum von 90 Minuten auf 70°C erwärmt und bei dieser Temperatur 3,5 Stunden belassen. Das Rohprodukt wurde

mit heißem Wasser chloridfrei gewaschen.

Die entstandene MHPC weist folgende Substitutionsgrade
auf: DS(OMe) = 1.03
MS(HP) = 2.34
Die Chemikalienausbeute, bezogen auf Propylenoxid, beträgt nur 20,8 %.

Im folgenden werden die Eigenschaften der gemaß Beispiel hergestellten erfindungsgemäßen Methylhydroxypropyl-cellulose (MHPC) mit anderen Celluloseethern verglichen.

### Aschegehalt

Die MHPC gemäß Beispiel 1 weist einen sehr niedrigen Aschegehalt (bestimmt als Na₂SO₄) von 0,3 % auf. Zur Verdeutlichung dieses Vorteils sind in Tabelle 1 Aschegehalte von verschiedenen Celluloseethern zusammengetragen.

**Tabelle 1**

| Aschegehalte von Celluloseethern (CE) | | | |
|---|---|---|---|
| CE | DS | MS | Aschegehalt (als Na₂SO₄) |
| HEC | | 2,5 | < 4 % |
| MHEC | 1,8 | 0,4 | 1,5 % |
| HPC | | 4 | < 0,5 % |
| MHPC (erfindungsgemäß) | 2,63 | 1,63 | 0,3 % |
| HEC: erhalten gemäß DE-PS 2 751 411 MHEC: erhalten gemäß EP 0 076 988 HPC: erhalten gemäß US-PS 3 278 521 | | | |

### Grenzflächenspannung

Wäßrige Lösungen der MHPC sind stark grenzflächenaktiv. Die Ursache liegt in der gleichzeitigen Anwesenheit von hydrophilen und hydrophoben Substituenten. In Tabelle 2 ist die Grenzflächenspannung der erfindungsgemäßen MHPC einigen kommerziellen Celluloseethern gegenübergestellt. Die Grenzflächenspannung wurde nach der Ringabreißmethode gemessen. Dabei wird die Spannung, die eine Feder einer Waage haben muß, um einen Ring aus einer 0,1 %igen Celluloseetherlösung herauszuziehen, bestimmt. Hierzu wurde ein Tensiometer der Fa. Krüß verwendet.

**Tabelle 2**

| Grenzflächenspannung von Celluloseethern (entnommen aus E.D. Klug, Food Technology 24 (1970), 51) | | | |
|---|---|---|---|
| CE | DS | MS | Grenzflächenspannung 0,1 %ige Lösung [mN/m] |
| CMC | 0,8 | | 71 |
| HEC | | 2,5 | 64 |
| MHPC | 1,6-1,7 | 0,1-0,2 | 44-50 |
| MC | 1,8 | | 47-53 |
| HPC | | 4 | 45 |
| MHPC (erfindungsgemäß) | 2,63 | 1,63 | 40 |

### Löslichkeit

Die erfindungsgemäßen Celluloseether sind in einer Vielzahl von organischen Lösemitteln löslich. Zur Bestimmung der Löslichkeit wurden in einem Probenröhrchen 0,6 g des Celluloseethers bis zu einem Gesamtgewicht von 30 g mit dem zu untersuchenden Lösemittel versetzt. Nach einer Verweilzeit von 24 Stunden auf einem Schüttelgerät wurde die Güte der Löslichkeit bestimmt. In Tabelle 3 wird die Überlegenheit der erfindungsgemäßen Celluloseether gegenüber anderen als organolöslich beschriebenen Methylhydroxypropylcellulosen deutlich.

**Tabelle 3**

| Löslichkeiten in EtOH | | | |
|---|---|---|---|
| CE | DS | MS | Löslichkeit in Ethanol |
| MHPC (erfindungsgemäß) | 2,63 | 1,63 | löslich |
| MHPC (US-PS 4 614 545 entsprechend Beispiel 1) = Vergleichsbeispiel 2 | 2,12 | 0,82 | stark angequollen |

### Filmbildung

Die neuen Celluloseether zeigen eine gute Filmbildung. Zur Herstellung von Filmen wurde eine 10 %ige Lösung des Celluloseethers in Ethanol hergestellt. Es wurden Filme auf Glasplatten ausgezogen und diese 1 Stunde bei 50°C im Umlufttrockenschrank getrocknet und von der Glasplatte abgezogen. Die Filme sind klar, sehr flexibel und lösen sich weder in Öl noch Benzin.

Die mechanischen Festigkeiten der Filme wurden nach DIN 53 455 bestimmt. Die Zugprüfversuche wurden mit einer Franck-Universal-Prüfmaschine 81565.553 der Fa. Karl Franck GmbH, Weinheim/Birkenau, durchgeführt. Die Vorteile, speziell der erfindungsgemäßen MHPC, gehen aus Tabelle 4 hervor.

**Tabelle 4**

| Mechanische Festigkeiten wasserlöslicher Celluloseether-Folien | | | | | |
|---|---|---|---|---|---|
| CE | DS | MS | Reißfestigkeit [N/mm²] | Reißdehnung [%] | E-Modul [N/mm²] |
| CMC | 0,9 | | 37,3 | 10,9 | 35,1 |
| MHEC | 1,4 | 0,2 | 35,3 | 26,3 | 34,6 |
| HEC** | | 2,5 | 28 | 15-40 | |
| HPC** | | 4 | 14 | 56 | |
| MHPC (erfindungsgemäß) | 2,63 | 1,63 | 20,9 | 83,5 | 64 |

| | | | | | |
|---|---|---|---|---|---|
| ^{**)} entnommen aus: E.D. Klug, J. Polymer Sci., Part C, 36 (1977), S. 491) | | | | | |

### Erweichungspunkt

Mit Hilfe eines elektrisch beheizbaren Mikroskops der Firma Leitz, Wetzlar, wurde der Erweichungspunkt bei einer Aufheizgeschwindigkeit von 3°C/min bestimmt.

Ein niedriger Erweichungspunkt ist für die Verarbeitbarkeit von Thermoplasten von Vorteil. Aus Tabelle 5 geht die Überlegenheit der erfindungsgemäß hergestellten Methylhydroxypropylcellulosen hervor.

**Tabelle 5**

| Erweichungspunkte | |
|---|---|
| CE | Erweichungspunkt |
| HPC | 178°C |
| MHPC (erfindungsgemäß) | 153°C |
| Vergleichsbeispiel 1 | 228°C |
| Vergleichsbeispiel 2* | 184°C |
| HPC: erhalten gemäß US-PS 3 278 521 | |

| | |
|---|---|
| * gemäß US-A-4 614 545, Beispiel 1 | |

## Patentansprüche

1. Thermoplastische in Wasser und organischen Lösungsmitteln lösliche (d.h., daß sich wenigstens 2g/100g Wasser oder polares Lösungsmittel bei 25°C klar lösen) Methylhydroxypropylcelluloseether, dadurch gekennzeichnet, daß der durchschnittliche Substitutionsgrad DS mit Methylgruppen 1,5 bis 2,9 und der molare Substitutionsgrad MS mit Hydroxypropylgruppen 1,4 bis 1,9 beträgt.

2. Celluloseether gemäß Anspruch 1, dadurch gekennzeichnet, daß der durchschnittliche Substitutionsgrad DS-Methyl 2,4 bis 2,6 beträgt.

3. Celluloseether nach wenigstens einem der vorhergehenden Ansprüche, dadurch gekennzeichnet, daß der molare Substitutionsgrad MS (Hydroxypropyl) 1,5 bis 1,7 beträgt.

4. Celluloseether nach wenigstens einem der vorhergehenden Ansprüche, dadurch gekennzeichnet, daß der thermische Flockpunkt einer 0,5 %igen wäßrigen Lösung wenigstens 30°C beträgt.

5. Vefahren zur Herstellung eines hochsubstituierten Methylhydroxypropylcelluloseethers, gemäß einem der Ansprüche 1 bis 4, dadurch gekennzeichnet, daß das Verfahren in folgenden Schritten durchgeführt wird:
a) Bildung einer Alkalicellulose durch Umsetzung von Cellulose mit Alkali
b) Umsetzung der Alkalicellulose mit einer Hydroxypropylgruppen übertragenen Verbindung und
c) Methoxylierung nach Abschluß der Hydroxypropylierung durch Zugabe eines Methylierungsmittels.

6. Verfahren nach Anspruch 5, dadurch gekennzeichnet, daß wenigstens ein Reaktionsschritt in Gegenwart eines organischen Lösungsmittels durchgeführt wird.

7. Verfahren nach wenigstens einem der vorhergehenden Ansprüche, dadurch gekennzeichnet, daß
1. die Alkalisierung mit wenigstens 1,6 Mol wäßriger NaOH pro Mol wiederkehrender Anhydroglykoseeinheiten durchgeführt wird,
2. die Propoxylierung bei 50 bis 100°C durchgeführt wird,
3. nach Abschluß der Propoxylierung das Methylierungsmittel zugegeben wird und daß
4. gegebenenfalls zwischen Propoxylierung und Methylierung gegebenenfalls weiteres Alkali nach zwischenzeitlicher Abkühlung zugegeben wird.

8. Verfahren nach wenigstens einem der vorhergehenden Ansprüche, dadurch gekennzeichnet, daß zur Hydroxypropylierung Propylenoxid und zur Methylierung Methylchlorid verwendet wird.

9. Verwendung eines Celluloseethers gemäß einem der Ansprüche 1 bis 4 zur Herstellung von Folien und Beschichtungen.

## Claims

1. Thermoplastic methyl hydroxypropyl cellulose ethers soluble in water and organic solvents (i.e. at least 2 g dissolve clearly in 100 g water or polar solvent at 25°C), characterized in that the average degree of substitution DS with methyl groups is 1.5 to 2.9 and the molar degree of substitution MS with hydroxypropyl groups is 1.4 to 1.9.

2. Cellulose ethers as claimed in claim 1, characterized in that the average degree of substitution DS methyl is 2.4 to 2.6.

3. Cellulose ethers as claimed in at least one of the preceding claims, characterized in that the molar degree of substitution MS (hydroxypropyl) is 1.5 to 1.7.

4. Cellulose ethers as claimed in at least one of the preceding claims, characterized in that the thermal flocculation point of a 0.5% aqueous solution is at least 30°C.

5. A process for the production of a highly substituted methyl hydroxypropyl cellulose ether according to any of claims 1 to 4, characterized in that it comprises the following steps:
a) formation of an alkali cellulose by reaction of cellulose with alkali
b) reaction of the alkali cellulose with a compound transferring hydroxypropyl groups and
c) methoxylation after the hydroxypropylation by addition of a methylating agent.

6. A process as claimed in claim 5, characterized in that at least one reaction step is carried out in the presence of an organic solvent.

7. A process as claimed in at least one of the preceding claims, characterized in that
1. the alkalization step is carried out with at least 1.6 moles of aqueous NaOH per mole of recurring anhydroglucose units,
2. the propoxylation step is carried out at 50 to 100°C,
3. the methylating agent is added after the propoxylation step and
4. more alkali is optionally added after intermediate cooling, optionally between propoxylation and methylation.

8. A process as claimed in at least one of the preceding claims, characterized in that propylene oxide is used for the hydroxypropylation while methyl chloride is used for the methylation.

9. The use of a cellulose ether as claimed in at least one of the preceding claims for the production of films and coatings.

## Revendications

1. Ethers méthylhydroxypropyliques de la cellulose, thermoplastiques, solubles dans l'eau et les solvants organiques (c'est-à-dire qu'on obtient des solutions limpides à 25°C à des concentrations d'au moins 2 g pour 100 g d'eau ou de solvant polaire), caractérisés en ce que leur degré de substitution moyen DS par les groupes méthyles est de 1,5 à 2,9 et leur degré de substitution molaire MS par les groupes hydroxypropyles est de 1,4 à 1,9.

2. Ethers cellulosiques selon la revendication 1, caractérisés en ce que le degré de substitution moyen DS-méthyle est de 2,4 à 2,6.

3. Ethers cellulosiques selon au moins une des revendications qui précèdent, caractérisés en ce que le degré de substitution molaire MS (hydroxypropyle) est de 1,5 à 1,7.

4. Ethers cellulosiques selon au moins une des revendications qui précèdent, caractérisés en ce que le point de floculation d'une solution aqueuse à 0,5 % à la chaleur est d'au moins 30°C.

5. Procédé de préparation d'un éther méthylhydroxypropylique de la cellulose fortement substitué selon une des revendications 1 à 4, caractérisé en ce qu'il comprend les stades opératoires suivants :
a) formation d'une alcalicellulose par réaction de la cellulose avec un alcali,
b) réaction de l'alcalicellulose avec un composé apportant des groupes hydroxypropyles et
c) après hydroxypropylation, méthoxylation par addition d'un agent méthylant.

6. Procédé selon la revendication 5, caractérisé en ce que l'un au moins des stades opératoires est réalisé en présence d'un solvant organique.

7. Procédé selon au moins une des revendications qui précède, caractérisé en ce que :
1. l'alcalinisation est réalisée avec au moins 1,6 mole de NaOH aqueux par mole de motifs répétés d'anhydroglucose,
2. la propoxylation est réalisée à des températures de 50 à 100°C,
3. après propoxylation, on ajoute l'agent méthylant et
4. le cas échéant, entre la propoxylation et la méthylation, et après refroidissement, on ajoute des compléments d'alcali.

8. Procédé selon au moins une des revendications qui précèdent, caractérisé en ce que, pour l'hydroxypropylation, on utilise l'oxyde de propylène et pour la méthylation le chlorure de méthyle.

9. Utilisation d'un éther cellulosique selon une des revendications 1 à 4 pour la fabrication de feuilles et l'application de revêtements.
